## Europäisches Patentamt

## European Patent Office

## Office européen des brevets

(19)

(11) Veröffentlichungsnummer: **0 021 493**
**B1**

(12) **EUROPÄISCHE PATENTSCHRIFT**

(45) Veröffentlichungstag der Patentschrift:
**11.01.84**

(21) Anmeldenummer: **80200528.0**

(22) Anmeldetag: **09.06.80**

(51) Int. Cl.³: **A 01 G 5/00**, B 26 B 27/00

(54) **Handgerät zum schrägen Anschneiden von Blumenstengeln.**

(30) Priorität: **20.06.79 CH 5777/79**

(43) Veröffentlichungstag der Anmeldung:
**07.01.81 Patentblatt 81/1**

(45) Bekanntmachung des Hinweises auf die Patenterteilung:
**11.01.84 Patentblatt 84/2**

(84) Benannte Vertragsstaaten:
**AT BE DE FR GB IT LU NL SE**

(56) Entgegenhaltungen:
**US - A - 2 806 325**
**US - A - 3 940 842**
**US - A - 4 001 934**

(73) Patentinhaber: **Dost, Franz Borgias, Riedeggstrasse 4,**
**CH-3626 Hümibach Kanton Bern (CH)**

(72) Erfinder: **Dost, Franz Borgias, Riedeggstrasse 4,**
**CH-3626 Hümibach Kanton Bern (CH)**

(74) Vertreter: **Marer, Joseph, c/o Peruhag Case**
**postale 2050, CH-3001 Berne (CH)**

## Handgerät zum schrägen Anschneiden von Blumenstengeln

Die Erfindung betrifft ein Handgerät zum schrägen Anschneiden von Blumenstengeln, mit einem Körper und einem im Körper eingebauten Schneidwerkzeug.

Die Schnittrosen bzw. Schnittblumen werden, um sie frisch zu halten, mit meist stumpfen, herkömmlichen Haushaltmessern nachgeschnitten.

Die Verwendung von Messern birgt eine Gefahr in sich, daß Verletzungen (Schnittwunden) bei der die Stengel nachschneidende Person auftreten können. Außerdem können mit einem Messer nicht saubere schräge Schnitte an den Stengeln erzielt werden.

Um solche Verletzungen (insbesondere bei Kindern) zu vermeiden, ist in der US-A-3 940 842 ein Gerät beschrieben, das zum Aufschlitzen von Würstchen dient. Durch das Gerät ist eine axiale Bohrung durchgeführt, in welcher eine Kunststoffklinge angeordnet ist, die zur Achse der Bohrung geneigt liegt.

Mit einem solchen Gerät können aber nur Würstchen oder dergleichen aufgeschlitzt werden. Ein solches Gerät kann nicht als Gerät zum Nachschneiden von Stengeln von Schnittrosen oder Schnittblumen verwendet werden.

In der US-A-2 806 325 ist ein Gerät zum Schälen und schrägen Anschneiden von Schnittrosenstengeln beschrieben. Dies geschieht durch Zusammendrücken von zwei Armen des Gerätes, welche Arme mit gegeneinander bewegbaren Platten versehen sind, die Messerschneiden aufweisen.

Der Stengel der Schnittrose muß hier aber ohne Führung entsprechend unter der einen Messerschneide plaziert werden. Auch hier ist die Schneidvorrichtung des Gerätes nicht gegen Eingriff geschützt.

Die Erfindung soll durch ein einfaches Handgerät diesem Übelstand Abhilfe schaffen.

Das Schneidwerkzeug des Gerätes soll gegen Eingriff geschützt werden und der Blumenstengel mühelos und direkt bis zum Schneidwerkzeug gebracht werden.

Diese Aufgaben werden erfindungsgemäß beim eingangs erwähnten Handgerät durch die Merkmale der Kennzeichnung des Patentanspruchs 1, Patentanspruchs 2 und Patentanspruches 3 gelöst.

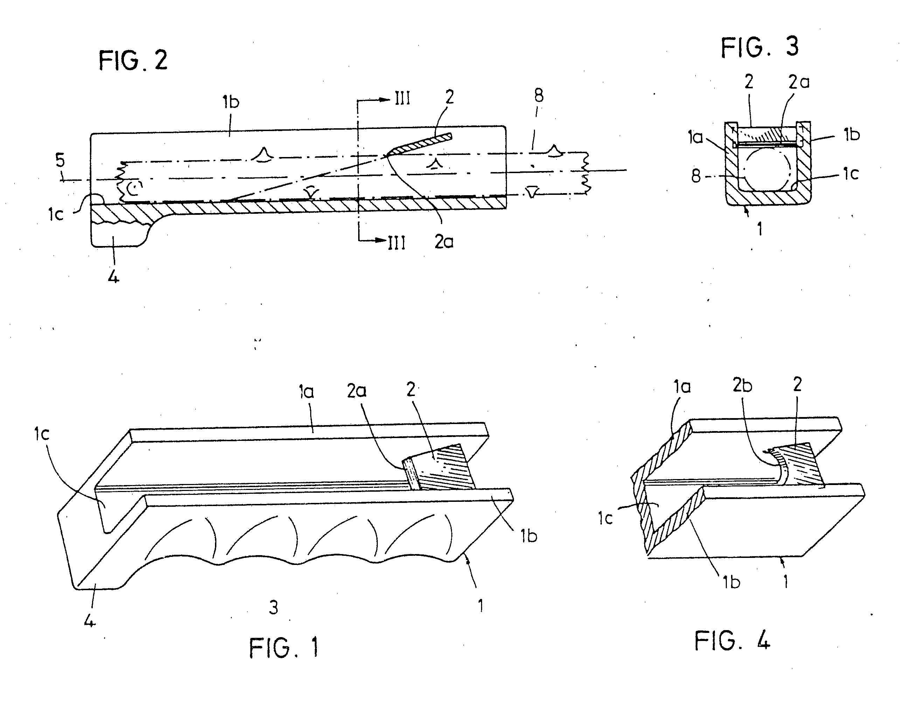

Der Erfindungsgegenstand wird nachstehend anhand der Zeichnungen beispielsweise näher erläutert. Es zeigt Fig. 1 eine perspektivische Ansicht des erfindungsgemäßen Handgerätes, dessen Körper zwei parallel zueinander verlaufende Wände und einen Boden aufweist,

Fig. 2 eine Ansicht des Gerätes nach der Fig. 1, teilweise im Schnitt,

Fig. 3, einen Schnitt entlang der Linie III-III der Fig. 2,

Fig. 4 eine perspektivische Ansicht eines Teils des Körpers des Gerätes nach der Fig. 1, mit einer anderen Ausführungsform der Klinge als diejenige nach der Fig. 1,

Fig. 5, eine perspektivische gesprengte Ansicht einer anderen Ausführungsform des Gerätes, dessen Körper aus zwei Teilen besteht,

Fig. 6 einen Querschnitt des Gerätes nach der Fig. 5, wobei die beiden Teile im zusammengesetzten Zustand dargestellt sind,

Fig. 7 einen Querschnitt einer anderen Ausführungsform des einen Teils des Körpers nach der Fig. 5, mit einem Trog, und

Fig. 8 einen Längsschnitt einer noch anderen Ausführungsform des Gerätes mit einem trichterförmigen Schneidwerkzeug.

Das in den Fig. 1–4 dargestellte Handgerät zum schrägen Anschneiden von Stengeln von Schnittrosen oder Schnittblumen weist einen Körper 1 auf, der zwei zueinander parallel verlaufende Wände 1a, 1b, einen Boden 1c, einige an den Außenseiten der Wände 1a, 1b angebrachte Einbuchtungen 3 für Finger und einen Stützteil 4 besitzt. Die Wände 1a, 1b und der Boden 1c bilden einen axialen Einführungskanal für den nachzuschneidenden Stengel 8. Das Gerät wird von unten von einer Hand gehalten, so daß die Finger in die Fingereinbuchtungen 3 gelangen, wobei der durch die Wände 1a, 1b begrenzte Einführungskanal frei bleibt. In den Wänden 1a, 1b ist eine Klinge 2 eingesetzt, deren Schneide 2a, 2b entweder gradlinig oder halbrund ausgebildet ist.

Wie aus den Fig. 2 und 3 zu entnehmen ist, ist die Klinge 2 außerhalb der Längsachse 5 des Einführungskanals gelegt. Die Klinge ist geneigt zu der Längsachse 5 so angeordnet, daß ihre verlängerte Ebene mit der Längsachse 5 einen Winkel von 5 bis 45° einschließt. Der Rosenstengel 8 wird in den Einführungskanal von der Seite des Gerätes eingeführt, in welcher die Klinge 2 angeordnet ist. Der eingeführte Rosenstengel 8 wird an die Seite der Klinge gedrückt und durch die Rückbewegung des Rosenstengels 8 bzw. des Gerätes in der Gegenrichtung abgeschnitten.

Der abgeschnittene Teil tritt aus dem Einführungskanal oberhalb der Klinge 2 heraus. Durch die halbrunde Schneide 2b der Klinge 2 wird erzielt, daß mehr als 50% der Rinde des Rosenstengels 8 abgeschnitten wird, so daß die Wasseraufnahme durch den Rosenstengel, wenn er ins Wasser gelegt wurde, größer wird. Der Winkel des Anschneidens des Stengels kann durch die verschiedene Neigung der Klinge zu der Längsachse 5 des Einführungskanals geändert werden.

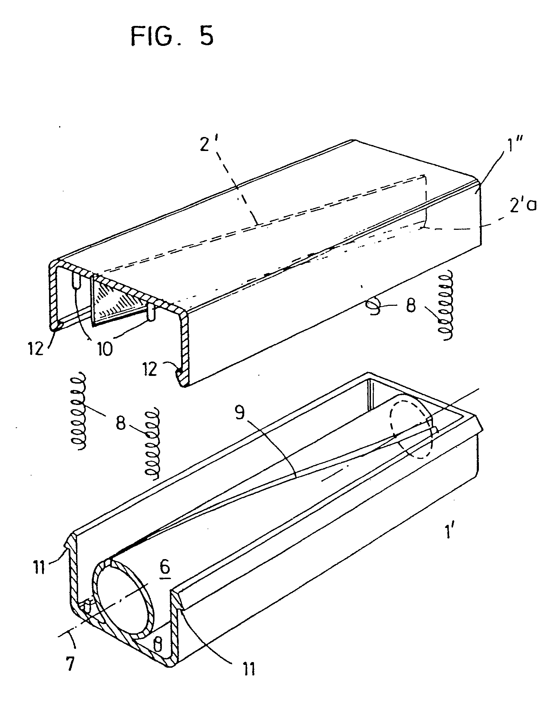

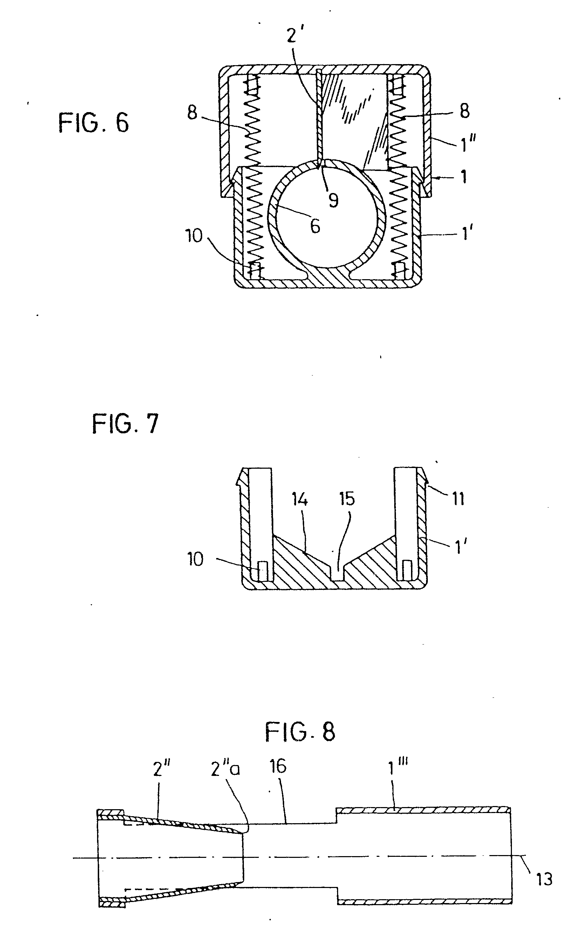

In den Fig. 5 und 6 ist eine Ausführungsform des Handgerätes gezeigt, dessen Körper aus zwei Teilen 1', 1'' besteht.

Diese Teile 1', 1'' sind aufeinander aufgesetzt und begrenzt gegeneinander verschiebbar. Durch Einrastkanten 11, 12 auf den beiden Teilen ist der Verschiebeweg begrenzt. Zwischen den beiden Teilen 1', 1'' sind auf Führungsstiften 10 vier Schraubenfedern 8 vorgesehen. Die beiden Teile 1', 1'' sind gegen die Wirkung dieser Schraubenfedern 8 zusammendrückbar. Der eine Teil 1' umfaßt einen Einführungskanal, der durch eine schräggeschlitzte Hülse 6 gebildet ist, die mit dem einen Teil 1' einstückig ist. Der andere Teil 1'' umfaßt eine in seinem Bodenteil eingesetzte längliche Klinge 2', deren Schneide 2'a geradlinig ausgebildet ist. Diese Klinge 2', ist wie die Hülse 6 nach innen des Körpers gerichtet.

Nach der Einführung eines Stengels in die Hülse 6 durch die eine Seite des Körpers werden die beiden Teile 1', 1'' zusammengedrückt, wobei die längliche Klinge 2' durch den Schlitz 9 der Hülse 6 durchdringt und den Stengel schräg abschneidet. Der abgeschnittene Teil des Stengels fällt dann durch die andere Seite des Körpers heraus.

Auch bei dieser Ausführungsform ist die längliche Klinge 2' außerhalb der Längsachse 7 des Einführungskanals angeordnet. Die verlängerte Ebene der länglichen Klinge 2' schließt mit der Längsachse 7 des Einführungskanals einen Winkel von 5−30° ein. Mit dieser Ausführungsform wird am Stengel ein besonders sauberer Schnitt erzielt.

Eine Variante des Einführungskanals des Gerätes nach der Fig. 5 ist in der Fig. 7 dargestellt. Anstelle der Hülse 6 nach den Fig. 5 und 6 ist hier der Einführungskanal in Form eines Troges 14 gebildet, der mit einer in Längsrichtung des Troges schrägverlaufenden Rille 15 zum Führen der länglichen Klinge 2' beim Zusammendrücken der beiden Teile 1', 1'' gebildet ist.

In der Fig. 8 ist eine noch weitere Ausführungsform des Gerätes dargestellt. Das Schneidwerkzeug hat hier die Form einer Trichterklinge 2''. Die Trichterklinge 2'' ist in den Körper 1'''' symmetrisch zur Längsachse 13 des Einführungskanals eingesetzt, daß sie einen Teil des Einführungskanals bildet. Die Trichterklinge 2'' ist an ihrem nach innen des Körpers 1'''' weisenden Ende mit einer kreisrunden Schneide 2''a versehen. Mit 16 sind Ausnehmungen im Körper 1'''' bezeichnet, die sich im Bereich der kreisrunden Schneide 2''a befinden und zum Austritt des abgeschnittenen Teils des Stiels dienen. Bei dieser Ausführungsform kann der Rosen- bzw. Blumenstengel auf bliebige Seiten gedrückt werden, um abgeschnitten zu werden.

Die Handhabung des obenbeschriebenen Handgerätes ist wegen seiner Ausmaße sehr einfach. Das Gerät wird nur in einer Hand gehalten oder von einer Hand betätigt. Beim schrägen Anschneiden der Stengel kann die bedienende Person durch das Schneidwerkzeug, das sich im Körper des Gerätes befindet, nicht verletzt werden. Je nach Einstellung des Schneidwerkzeugs können nach Wunsch kurze oder extrem lange schräge saubere Schnitte vorgenommen werden. Der handliche Körper gewährleistet auch bei starken Stengeln eine sichere Führung des Schneidwerkzeugs.

**Patentansprüche**

1. Handgerät zum schrägen Anschneiden von Blumenstengeln, mit einem Körper und einem im Körper eingebauten Schneidwerkzeug, dadurch gekennzeichnet, daß der Körper (1) einen für den anzuschneidenden Stengel (8) bestimmten offenen Einführungskanal bildet, der von einem Boden (1c) und zwei zueinander parallel und zum Boden (1c) senkrecht verlaufenden Wänden (1a, 1b) begrenzt ist, und daß das Schneidwerkzeug eine Klinge (2) ist, die in den beiden Wänden (1a, 1b) so eingesetzt ist, daß ihre verlängerte Ebene mit der Längsachse (5) des Einführungskanals einen Winkel von 5−45° einschließt (Fig. 1, 2).

2. Handgerät zum schrägen Anschneiden von Blumenstengeln, mit einem Körper und einem im Körper eingebauten Schneidwerkzeug, dadurch gekennzeichnet, daß der Körper aus zwei Teilen (1', 1'') besteht, die aufeinander begrenzt bewegbar aufgesetzt und gegen die Wirkung von zwischen den beiden Teilen (1', 1'') angeordneten Federn (18) zusammendrückbar sind, wobei der eine Teil (1') einen für den anzuschneidenden Stengel bestimmten Einführungskanal umfaßt und in dem anderen Teil (1'') das Schneidwerkzeug in Form einer länglichen Klinge (2') eingesetzt ist, deren verlängerte Ebene mit der Längsachse (7) des Einführungskanals einen Winkel von 5−30°C einschließt (Fig. 5, 6).

3. Handgerät zum schrägen Anschneiden von Blumenstengeln, mit einem Körper und einem im Körper eingebauten Schneidwerkzeug, dadurch gekennzeichnet, daß der Körper (1'''') einen für den anzuschneidenden Stengel bestimmten geschlossenen Einführungskanal bildet, daß das Schneidwerkzeug eine in den Körper (1'''') symmetrisch zur Längsachse (13) des Einführungskanals eingesetzte Trichterklinge (2'') ist, die einen Teil des Einführungskanals bildet und eine kreisrunde Messerschneide (2''a) aufweist, und daß der Körper (1'''') im Bereich der kreisrunden Schneide (2''a) Ausnehmungen (16) aufweist (Fig. 8).

4. Handgerät nach Patentanspruch 1, dadurch gekennzeichnet, daß die Messerschneide (2a, 2b) der Klinge (2) geradlinig oder halbrund ausgebildet ist (Fig. 1, 4).

5. Handgerät nach Patentanspruch 2, dadurch gekennzeichnet, daß der Einführungskanal durch eine längliche, schräg geschlitzte Hülse (6) gebildet ist, in welche durch den Schlitz (9) die längliche Klinge (2') beim Zusammendrücken der beiden Teile (1', 1'') einführbar ist (Fig. 5).

6. Handgerät nach Patentanspruch 5, dadurch gekennzeichnet, daß die Messerschneide (2'a) der länglichen Klinge (2') geradlinig ist (Fig. 5).

7. Handgerät nach Patentanspruch 2, dadurch gekennzeichnet, daß der Einführungskanal in Form eines Troges (14) mit einer in Längsrichtung des Troges schräg verlaufenden Rille (15) zum Führen der länglichen Klinge (2') beim Zusammendrücken der beiden Teile (1', 1'') gebildet ist (Fig. 7).

## Claims

1. Hand utensil for the angled cutting of flower stems, with a body and a cutting tool built into the body, characterized by the fact that the body (1) forms an open insertion channel for the stem to be cut (8), this channel being bordered by a floor (1c) and two parallel walls (1a, 1b) vertical to the floor (1c), and by the fact that the cutting tool is a blade (2) inserted in the two walls (1a, 1b) so that its elongated plane encloses an angle of 5—45° with the longitudinal axis (5) of the insertion channel (fig. 1, 2).

2. Hand utensil for the angled cutting of flower stems, with a body and a cutting tool built into the body, characterized by the fact that the body consists of two parts (1', 1'') set one on the other with limited moveability and compressable against the action of springs (18) located between the two parts (1', 1''), whereby one part (1') encloses an insertion channel for the stem to be cut and the other part (1'') holds the cutting tool in form of a longish blade (2'), whose elongated plane encloses an angle of 5—30° with the longitudinal axis (7) of the insertion channel (fig. 5, 6).

3. Hand utensil for the angled cutting of flower stems, with a body and a cutting tool built into the body, characterized by the fact that the body (1''') forms a closed insertion channel for the stem to be cut, by the fact that the cutting tool is a funnel blade (2'') installed in the body (1''') symmetrically to its longitudinal axis, and which funnel blade forms part of the insertion channel, with a circular cutting edge (2''a) with the plane inclined towards the longitudinal axis (13) of the insertion channel, and by the fact that the body (1''') has recesses (16) in the region of the circular cutting edge (2''a) (fig. 8).

4. Hand utensil according to claim 1, characterized by the fact that the cutting edge (2a, 2b) of blade (2) is of straight or semicircular form (fig. 1, 4). 5. Hand utensil according to claim 2, characterized by the fact that the insertion channel is formed by a longish sleeve (6) with an oblique slit into which, through the slit (9), the longish blade (2') can be introduced when the two parts (1', 1'') are pressed together (fig. 5).

6. Hand utensil according to claim 5, characterized by the fact that the cutting edge (2'a) of the longish blade (2') is straight (fig. 5).

7. Hand utensil according to claim 2, characterized by the fact that the insertion channel is formed as a trough (14) with a groove (15) running at an angle to the longitudinal direction of the trough and acting as guide for the longish blade (2') when the two parts (1', 1'') are pressed together (fig. 7).

## Revendications

1. Instrument manuel pour couper obliquement les tiges de fleurs, comprenant un corps et un outil de coupe monté dans le corps, caractérisé en ce que le corps (1) forme un canal ouvert d'introduction de la tige (8) à couper, corps qui est limité par un fond (1c) et deux parois (1a, 1b) parallèles entre elles et perpendiculaires au fond (1c), et en ce que l'outil de coupe est une lame (2) qui est montée entre les deux parois (1a, 1b) de manière que son plan prolongé fasse un angle compris entre 5—45° avec l'axe longitudinal (5) du canal d'introduction (fig. 1, 2).

2. Instrument manuel pour couper obliquement les tiges de fleurs, comprenant un corps et un outil de coupe monté dans le corps, caractérisé en ce que le corps est fait de deux pièces (1', 1'') déplaçables l'une sur l'autre de manière limitée et comprimables à l'encontre de ressorts (18) montés entre les deux pièces (1', 1''), une des pièces (1') comprenant un canal d'introduction de la tige à couper et l'autre pièce (1'') contenant l'outil de coupe sous forme d'une lame allongée (2'), dont le plan prolongé fait un angle compris entre 5—30° avec l'axe longitudinal (7) du canal d'introduction (fig. 5, 6).

3. Instrument manuel pour couper obliquement les tiges de fleurs, comprenant un corps et un outil de coupe monté dans le corps, caractérisé en ce que le corps (1''') constitue un canal d'introduction fermé pour la tige à couper, en ce que l'outil de coupe est une lame en forme d'entonnoir (2'') logée dans le corps (1''') symétriquement par rapport à son axe longitudinal, lame qui forme une partie du canal d'introduction et qui présente un tranchant circulaire (2''a), dont la surface est inclinée par rapport à l'axe longitudinal (13) du canal d'introduction, et en ce que le corps (1''') présemte des évidements (16) dans la zone de la lame circulaire (2''a) (fig. 8).

4. Instrument manuel selon la revendication 1, caractérisé en ce que le tranchant (2a, 2b) de la lame (2) est rectiligne ou semi-circulaire (fig. 1, 4).

5. Instrument manuel selon la revendication 2, caractérisé en ce que le canal d'introduction est constitué par une douille (6) allongée et fendue de biais dans laquelle la lame allongée (2') peut être introduite par la fente (9) en comprimant les deux pièces (1', 1'') (fig. 5).

6. Instrument manuel selon la revendication 5, caractérisé en ce que le tranchant (2'a) de la lame allongée (2') est rectiligne (fig. 5).

7. Instrument manuel selon la revendication 2, caractérisé en ce que le canal d'introduction à la forme d'un auge (14) avec une rainure (15) s'étendant de biais par rapport à l'axe longitudinal de l'auge pour guider la lame allongée (2') lorsque les deux pièces (1', 1'') sont comprimées (fig. 7).

FIG. 3

FIG. 2

FIG. 4

FIG. 1

## FIG. 5

FIG. 6

FIG. 7

FIG. 8